# EUROPÄISCHE PATENTSCHRIFT

(11) **EP 0 643 222 B1**
(45) Veröffentlichungstag und Bekanntmachung des Hinweises auf die Patenterteilung: **19.03.1997**
(21) Anmeldenummer: 94113174.0
(22) Anmeldetag: 24.08.1994
(51) Int. Cl.: F02P 19/02, F02D 41/14, B60R 25/04, F02P 11/04, F02N 17/047

(54) **Vorrichtung zum Steuern eines Heizelements in einem Kraftfahrzeug**
Device to control a heating element in an automotive vehicle
Dispositif pour commander un élément chauffant dans un véhicule automobile

(30) Priorität: 15.09.1993 DE 4331285
(43) Veröffentlichungstag der Anmeldung: 15.03.1995
(73) Patentinhaber: ROBERT BOSCH GMBH, 70442 Stuttgart (DE)
(72) Erfinder: Kaczynski, Bernhard, Dipl.-Ing., D-71334 Waiblingen (DE)

(56) Entgegenhaltungen:
- DE-A- 3 009 369
- FR-A- 2 376 306
- FR-A- 2 692 319

## Beschreibung

### Stand der Technik

Die Erfindung betrifft eine Vorrichtung zum Steuern eines Heizelements in einem Kraftfahrzeug gemäß dem Oberbegriff des Anspruch 1.

Es sind bereits Vorrichtungen zum Steuern eines Heizelements in einem Kraftfahrzeugs mit einer Steuereinrichtung bekannt, bei denen der Stromfluss durch das Heizelement in Abhängigkeit des Eintritts eines bestimmten vorgebbaren Zustandes freigebbar ist. Hierbei werden bestimmte Sensoren abgefragt, die beispielsweise anzeigen, ob ein Fahrer auf dem Fahrersitz Platz genommen hat, ob der Fahrer oder gegebenenfalls weitere Mitfahrer ihre Sicherheitsgurtschlösser eingerastet haben, ob sämtliche Türen des Kraftfahrzeuges geschlossen sind, oder weitere, einen möglichen kurz bevorstehenden Start der Brennkraftmaschine indizierende Bedingungen abgefragt sind. Diese bekannten Vorrichtungen haben den Nachteil, daß das Heizelement auch dann vorgeglüht wird, wenn die oben genannten Bedingungen bzw. Zustände erfüllt bzw. eingetreten sind, die Brennkraftmaschine des Kraftfahrzeuges jedoch noch nicht gestartet werden soll.

Weiterhin sind Wegfahrsicherungseinrichtungen, beispielsweise Alarmanlagen bekannt, die ein Kraftfahrzeug vor unbefugtem Benutzen schützen sollen. Diese Wegfahrsicherungseinrichtungen werden im allgemeinen mittels eines verdeckt angeordneten Schalters und/oder einem codierten Infrarot- oder Ultraschallsignal aktiviert. Die Wegfahrsicherungseinrichtungen reagieren beispielsweise bei unbefugtem Öffnen der Türen und/oder bei unbefugtem Betätigen eines Starterschlosses.

### Vorteile der Erfindung

Die erfindungsgemäße Vorrichtung mit den im Anspruch 1 genannten Merkmalen hat dem gegenüber den Vorteil, daß das Heizelement nur dann aktiviert wird, wenn der Fahrer die Brennkraftmaschine tatsächlich starten und damit wirklich losfahren will. Dadurch, daß mit dem Abschalten der Wegfahrsicherungseinrichtung gleichzeitig ein erstes Schaltmittel betätigt wird, daß den Stromfluß durch das Heizelement freigibt, wird sichergestellt, daß das Heizelement erst dann vorgeglüht wird, wenn ein tatsächlicher Start der Brennkraftmaschine unmittelbar bevorsteht. Insbesondere wenn die Wegfahrsicherungseinrichtung so ausgelegt ist, daß sie erst durch unbefugtes Betätigen eines Starterschalters ausgelöst wird, können beispielsweise die Türen des Kraftfahrzeuges geöffnet und/oder die Sicherheitsgurte eingerastet werden, ohne daß in diesem Falle das Heizelement bereits aktiviert wird. Die Aktivierung des Heizelements erfolgt erst zu dem Zeitpunkt, zu dem die Wegfahrsicherungseinrichtung tatsächlich abgeschaltet wird und damit ein sicheres Indiz für das unmittelbare Bevorstehen des Startens der Brennkraftmaschine vorliegt.

Weitere vorteilhafte Ausgestaltungen der Erfindung ergeben sich aus den übrigen in den Unteransprüchen genannten Merkmalen.

### Zeichnung

Die Erfindung wird nachfolgend in einem Ausführungsbeispiel anhand der zugehörigen Zeichnung, die ein Blockdiagramm der erfindungsgemäßen Vorrichtung zeigt, näher erläutert.

### Beschreibung des Ausführungsbeispiels

Die erfindungsgemäße Vorrichtung betrifft Heizelemente in Kraftfahrzeugen. In Kraftfahrzeugen werden Heizelemente in Form von Glühstiftkerzen, beispielsweise beim Starten von Dieselmotoren eingesetzt. Die Heizelemente können jedoch auch weiterhin zum Vorheizen von Sensoren zur Erfassung der Abgaszusammensetzung eingesetzt werden. Diese, üblicherweise als Lambdasonden bezeichneten Sensoren, arbeiten nur in einem bestimmten Temperaturbereich zufriedenstellend. Werden diese Sensoren nun bereits vor dem Start der Brennkraftmaschine beheizt, so arbeiten diese bereits nach relativ kurzer Betriebszeit bzw. unmittelbar nach dem Start der Brennkraftmaschine mit einem hohen Wirkungsgrad. Hierdurch lassen sich die Abgasemissionen der Brennkraftmaschine in der Startphase erheblich reduzieren.

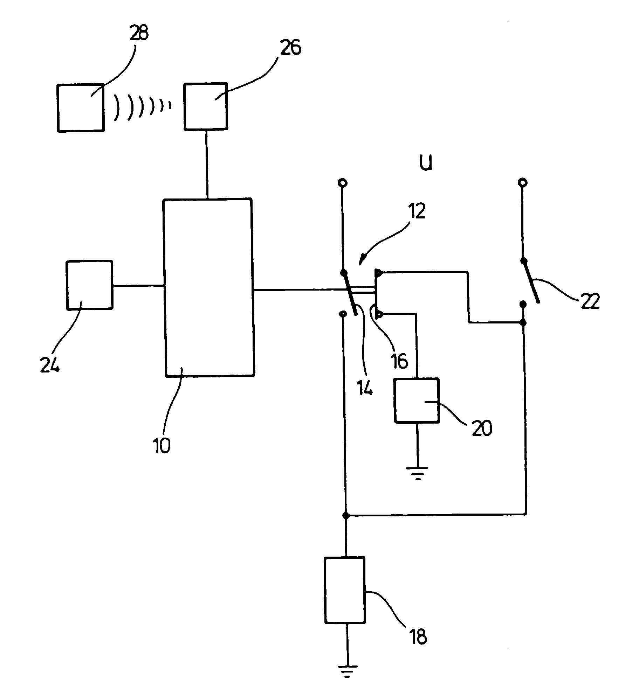

In der Figur ist die Vorrichtung am Beispiel einer Glühstiftkerze eines Dieselmotors beschrieben. Die Vorrichtung weist eine Steuereinrichtung 10 auf, der ein erstes Schaltmittel 12 zugeordnet ist. Das Schaltmittel 12 ist zweipolig ausgebildet und besitzt einen ersten Kontakt 14 und einen zweiten Kontakt 16. Der Kontakt 14 ist dabei als Schließer und der Kontakt 16 als Öffner ausgebildet. Über den Kontakt 14 ist eine Glühstiftkerze 18 mit einer Versorgungsspannung U verbindbar. Die Versorgungsspannung wird beispielsweise von einem Glühzeitsteuergerät bereitgestellt. Dieses kann gegebenfalls Bestandteil der Steuereinrichtung 10 sein. Mit seinem anderen Pol liegt die Glühstiftkerze 18 an Masse. Der Kontakt 16 verbindet eine Wegfahrsicherungseinrichtung 20 mit einem Kontakt eines zweiten Schaltmittels 22. Die Wegfahrsicherungseinrichtung 20 liegt ebenfalls mit ihrem anderen Pol an Masse. Das Schaltmittel 22 ist als Glühstartschalter eines Zündschlosses ausgebildet und kann ebenfalls die Glühstiftkerze 18 mit der Versorgungsspannung U verbinden. Die Steuereinrichtung 10 steht mit einem Schalter 24 in Verbindung, über den die Wegfahrsicherungseinrichtung 20 manuell abgeschaltet werden kann. Weiterhin steht die Steuereinrichtung 10 mit einem Sensor 26 in Verbindung, der als Empfänger für Infrarot- oder Ultraschallsignale ausgelegt ist und über einen entsprechenden Sender 28 aktiviert werden kann.

Die erfindungsgemäße Vorrichtung übt folgende Funktion aus:

Im Ausgangszustand der Vorrichtung befindet sich die Wegfahrsicherungseinrichtung 20 in Bereitschaftsstellung. Dies bedeutet, daß bei unbefugtem Betätigen des Schaltmittels 22, beispielsweise das Einführen eines Zündschlüssels in das Zündschloß die Wegfahrsicherungseinrichtung 20 über den Kontakt 16 des Schaltmittels 12 mit der Versorgungsspannung U verbunden wird. Da die Wegfahrsicherungseinrichtung 20 gleichzeitig an Masse liegt, würde sie auslösen und ein Losfahren des Kraftfahrzeuges verhindern, beziehungsweise entsprechende akustische und/oder optische Warnsignale abgeben.

Wird jedoch die Steuereinrichtung 10 über den Schalter 24 bzw. den Sensor 26 mit einem Signal beaufschlagt, der das Ausschalten der Wegfahrsicherungseinrichtung 20 durch einen befugten Benutzer des Kraftfahrzeuges meldet, wird das erste Schaltmittel 12 angesteuert. Hierdurch unterbricht der Kontakt 16 den möglichen Verbindungsweg der Wegfahrsicherungseinrichtung 20 mit der Versorgungsspannung U über das zweite Schaltmittel 22. Gleichzeitig wird über den Kontakt 14 die Glühstiftkerze 18 mit der Versorgungsspannung U verbunden, so daß die Glühstiftkerze 18 auf eine vorgebbare Temperatur entsprechend der vom Glühzeitsteuergerät vorgegeben Spannung vorgeglüht werden kann. Bei nachfolgender Betätigung des Schaltmittels 22, also des Zündschlosses des Kraftfahrzeuges, kann die Wegfahrsicherungseinrichtung 20 nicht mehr auslösen, da die mögliche Verbindung über den Kontakt 16 des Schaltmittels 12 unterbrochen ist. Gleichzeitig kann bei geschlossenem Schaltmittel 22 der Glühvorgang der Glühstiftkerze 18 fortgesetzt werden. Je nach Zeitspanne zwischen Abschalten der Wegfahrsicherungseinrichtung 20 und Betätigen des Schaltmittels 22 tritt durch die bereits erfolgte, durch den geschlossenen Kontakt 14 bewirkte Einleitung des Vorglühvorganges der Glühstiftkerze 18, eine Verkürzung der Gesamtwartezeit beim Vorglühen ein. Gegebenenfalls kann die Brennkraftmaschine sofort gestartet werden, ohne daß eine weitere Wartezeit notwendig ist.

Der Vorglühprozeß der Glühstiftkerze 18 wird also nur dann aktiviert, wenn die Wegfahrsicherungseinrichtung 20 ausgeschaltet ist. Hierdurch wird einerseits die Diebstahlsicherheit des Kraftfahrzeuges erhöht. Andererseits wird gegenüber den bekannten Vorrichtungen zum Steuern eines Heizelements erreicht, daß der Vorglühprozeß bewußt erst dann eingeleitet werden kann, wenn die Wegfahrsicherungseinrichtung 20 ausgeschaltet wird. Insbesondere bei Wegfahrsicherungseinrichtungen, die über die unbefugte Betätigung des Zündschlosses auslösen, kann somit der Vorglühprozeß unabhängig von beispielsweise dem Einrasten von Sicherheitsgurten und Belasten eines oder mehrerer Sitzplätze in relativer Zeitnähe zu dem tatsächlichen Startvorgang der Brennkraftmaschine ausgelöst werden. Hierdurch werden unnötig lange Heizvorgänge und damit eine übermäßige Belastung der Batterie vermieden.

## Patentansprüche

1. Vorrichtung zum Steuern eines Heizelements in einem Kraftfahrzeug mit einer Steuereinrichtung, die einen Stromfluß durch das Heizelement in Abhängigkeit des Eintritts eines bestimmten vorgebbaren Zustandes freigibt, **dadurch gekennzeichnet**, daß ein erstes Schaltmittel (12) vorgesehen ist, das eine Wegfahrsicherungseinrichtung (20) abschaltet und gleichzeitig den Stromfluß freigibt.

2. Vorrichtung nach Anspruch 1 , **dadurch gekennzeichnet**, daß ein zweites Schaltmittel (22) vorgesehen ist, das bei Betätigung ebenfalls einen Stromfluß durch das Heizelement freigibt und gleichzeitig die Wegfahrsicherungseinrichtung (20) auslöst.

3. Vorrichtung nach Anspruch 2, **dadurch gekennzeichnet**, daß das zweite Schaltmittel (22) ein mit einem Zündschloß gekoppelter Glühstartschalter ist.

4. Vorrichtung nach einem der vorhergehenden Ansprüche, **dadurch gekennzeichnet**, daß die Wegfahrsicherungseinrichtung (20) mittels eines mechanischen Schalters (24) abschaltbar ist.

5. Vorrichtung nach einem der vorhergehenden Ansprüche, **dadurch gekennzeichnet**, daß die Wegfahrsicherungseinrichtung (20) mittels eines Sensors (26), der vorzugsweise codierte Infrarot- oder Ultraschallsignale empfangen kann, abschaltbar ist.

6. Vorrichtung nach einem der vorhergehenden Ansprüche, **dadurch gekennzeichnet**, daß es sich bei dem Heizelement um Glühstiftkerzen (18) einer selbst zündenden Brennkraftmaschine handelt.

7. Vorrichtung nach einem der vorhergehenden Ansprüche, **dadurch gekennzeichnet**, daß das Heizelement zur Beheizung eines Sensors zur Erfassung der Abgaszusammensetzung der Brennkraftmaschine verwendet wird.

## Claims

1. Device for controlling a heating element in an automotive vehicle, having a control device which enables a flow of current through the heating element as a function of the onset of a specific prescribable state, characterized in that a first switching means (12) is provided which switches off an immobilizer (20) and simultaneously enables the flow of current.

2. Device according to Claim 1, characterized in that a second switching means (22) is provided which, when activated, likewise enables a flow of current through the heating element and simultaneously activates the immobilizer (20).

3. Device according to Claim 2, characterized in that the second switching means (22) is a preheating switch which is coupled to an ignition lock.

4. Device according to one of the preceding claims, characterized in that the immobilizer (20) can be switched off by means of a mechanical switch (24).

5. Device according to one of the preceding claims, characterized in that the immobilizer (20) can be switched off by means of a sensor (26) which can preferably receive coded infrared signals or ultrasonic signals.

6. Device according to one of the preceding claims, characterized in that the heating element is sheathed-element heater plugs (18) of an internal combustion engine with compression ignition.

7. Device according to one of the preceding claims, characterized in that the heating element is used for heating a sensor for detecting the composition of the exhaust gases of the internal combustion engine.

## Revendications

1. Dispositif pour commander un élément chauffant dans un véhicule automobile, par l'intermédiaire d'une unité de commande qui délivre un courant électrique à l'élément de chauffage en fonction de l'apparition d'un état donné prédéterminé,
caractérisé en ce qu'
il comporte un premier contacteur (12) qui à la fois débranche un dispositif de sécurité anti-démarrage (20) et délivre le courant à l'élément de chauffage.

2. Dispositif selon la revendication 1,
caractérisé en ce qu'
il comporte un second contacteur (22) qui, actionné, délivre également un courant à l'élément chauffant et en même temps débranche le dispositif de sécurité anti-démarrage (20).

3. Dispositif selon la revendication 2,
caractérisé en ce que
le second contacteur (22) est un contact de démarrage de chauffage par incandescence, accouplé à une serrure d'allumage.

4. Dispositif selon l'une des revendications précédentes,
caractérisé en ce que
le dispositif de sécurité anti-démarrage (20) peut être débranché par l'action d'un interrupteur mécanique (24).

5. Dispositif selon l'une des revendications précédentes,
caractérisé en ce que
le dispositif de sécurité anti-démarrage (20) peut être débranché par un détecteur (26) pouvant de préférence recevoir des signaux infrarouges ou ultrasonores.

6. Dispositif selon l'une des revendications précédentes,
caractérisé en ce que
l'élément chauffant est constitué par des bougies de préchauffage à tige incandescente (18) d'un moteur à combustion interne à auto-allumage.

7. Dispositif selon l'une des revendications précédentes,
caractérisé en ce que
l'élément chauffant est utilisé pour préchauffer un détecteur de composition des gaz d'échappement du moteur à combustion interne.
